# EUROPÄISCHE PATENTANMELDUNG

(11) **EP 1 408 387 A1**
(43) Veröffentlichungstag der Anmeldung: **14.04.2004**
(21) Anmeldenummer: 03021284.9
(22) Anmeldetag: 19.09.2003
(51) Int. Cl.: G05B 19/418

(54) **Steuereinrichtung für eine Kunststoff verarbeitende Maschine**

(30) Priorität: 26.09.2002 DE 10244836
(71) Anmelder: Mannesmann Plastics Machinery GmbH, 80997 München (DE)
(72) Erfinder: Fischbach, Gunther, 82256 Fürstenfeldbruck (DE)
(74) Vertreter: Zollner, Richard

(57) **Zusammenfassung**

Um die Bedienung einer Kunststoff verarbeitenden Maschine flexibler zu gestalten, wird erfindungsgemäß vorgeschlagen, die Steuereinrichtung der Kunststoff verarbeitenden Maschinen mit einer drahtlosen Telekommunikationsvorrichtung auszustatten, die über ein Telekommunikationsnetzwerk Status- und Bedienungsinformationen mit einem Partnergerät austauschen kann, wobei als Partnergerät vorzugsweise ein Mobiltelefon oder ein Mobilfunk integrierender Kleinstcomputer eingesetzt wird.

## Beschreibung

Die Erfindung bezieht sich auf eine Steuereinrichtung für eine Kunststoff verarbeitende Maschine gemäß dem Oberbegriff des Anspruchs 1.

Bei der Wartung bzw. Bedienung von Kunststoff verarbeitenden Maschinen, insbesondere Spritzgießmaschinen, müssen Steuerbefehle bzw. verschiedene Parameter der Steuereinheit der Kunststoff verarbeitende Maschinen eingegeben werden. Herkömmlicherweise wird diese Eingabe über Eingabegeräte bewirkt, die entweder unmittelbar an der Steuereinheit angebracht sind oder über Kabel mit der Steuereinheit verbunden sind. Hierbei stellt sich das Problem, dass sich der Bediener der Kunststoff verarbeitenden Maschine nicht frei und uneingeschränkt bewegen und arbeiten kann, sondern für die Bedienung der Kunststoff verarbeitenden Maschine im ersten Fall sich vor der Steuereinheit befinden muss und im zweiten Fall sich im Radius der Drahtverbindung aufhalten muss.

Aus der DE 199 09 307 A1 ist eine Einrichtung mit einem Industrie-PC zum Einrichten, Bedienen und Beobachten von Maschinen zur Herstellung von Kunststoffprodukten bekannt, wobei der Industrie-PC und die Maschinen über eine drahtlose Fernsteuerung verbindbar sind.

Die WO 01/28752 A1 beschreibt eine beheizbare Spritzgießform mit vielfachen Sensoren, die ihre Ausgabeinformation über digitale Signale einer Spritzgießformsteuerung übermitteln, wobei die Übermittlung beispielsweise über Draht-, Funk- oder IR-Verbindung erfolgt.

In diesen vorbekannten Fällen muss darauf geachtet werden, dass man sich noch im jeweiligen Sende- bzw. Empfangsbereich befindet, was die Flexibilität der Anordnung einschränkt.

Aus der US 6,311,101 B1 ist eine Vorrichtung zum Steuern einer Spritzgießmaschine bekannt, bei der die Maschinensteuerung über eine Software ein Modem betreibt, welches an das Telefonnetz oder das Internet angeschlossen ist. Da die Maschinensteuerung gleichzeitig als Webserver arbeitet, kann sie von beliebigen räumlich weit entfernten Computern über einen Web Browser bedient werden, wobei allerdings keine Flexibilität in der Bedienung vor Ort vorliegt.
Demgegenüber liegt der Aufgabe die Aufgabe zugrunde, die Bedienung der Steuereinrichtung flexibel zu gestalten und auch über große Entfernungen zu ermöglichen.

Diese Aufgabe wird durch eine Steuereinrichtung gemäß den Patentansprüchen 1 bis 4 und durch ein Steuersystem gemäß Patentanspruch 6 gelöst; die abhängigen Patentansprüche betreffen vorteilhafte Weiterentwicklungen der Erfindung.

Erfindungsgemäß wird vorgeschlagen, die Steuereinrichtung mit einer drahtlosen Telekommunikationsvorrichtung zum Austausch von Informationen mit mindestens einem Partnergerät über ein Telekommunikationsnetz auszustatten. Dabei sollen insbesondere allgemein verfügbare Netze, wie Telefonnetze etc., eingesetzt werden.

Über das Telekommunikationsnetz können somit auf einfache Weise Statusinformationen, beispielsweise Betriebsdaten, Warnsignale oder Fehlermeldungen, an ein entfernt angeordnetes Partnergerät abgegeben werden, und über das Partnergerät können entsprechende Bedienungssignale über das Telekommunikationsnetzwerk an die Steuereinrichtung abgegeben werden. Als Partnergerät können dabei massenproduzierte standardisierte Hardware eingesetzt werden, beispielsweise Mobiltelefone, tragbare Computer oder auch PDA's (tragbare Kleinstcomputer mit vorzugsweise integriertem Mobilfunkteil). Durch den Einsatz massenproduzierter Hardware sind spezielle Bedienungselemente nicht erforderlich, sodass bei der Einrichtung und im Betrieb nur vergleichsweise geringe Kosten anfallen.

Vorzugsweise ist die drahtlose Telekommunikationsvorrichtung mit einer Einrichtung zur Spracherkennung ausgestattet, so dass eine Bedienung sprachgesteuert erfolgen kann. Insbesondere beim Einsatz eines Mobiltelefons als Partnergerät bietet dies den Vorteil, dass ein Einrichter oder Bediener der Maschine bei einem Einsatz einer Freisprechanlage (head set oder dgl.) freihändig arbeiten kann und gleichzeitig in Kommunikation mit der Steuereinheit der Kunststoff verarbeitende Maschine steht. Hier ist es insbesondere vorteilhaft, die Telekommunikationsvorrichtung mit einem Sprachgenerator zu versehen, da auf diese Weise im Dialogbetrieb gearbeitet werden kann.

Vorzugsweise arbeitet die Telekommunikationsvorrichtung mit gebräuchlichen Datenprotokollen, sodass Daten mit dem Partnergerät beispielsweise in Form von elektronischer Kurznachrichten (SMS, E-Mail) ausgetauscht werden können. Durch Zuweisung eigener Kennungen ("Telefonnummern") können mit einem einzelnen Partnergerät mehrere Kunststoff verarbeitende Maschinen überwacht bzw. bedient werden bzw. kann eine Kunststoff verarbeitende Maschine mit mehreren Partnergeräten kommunizieren.

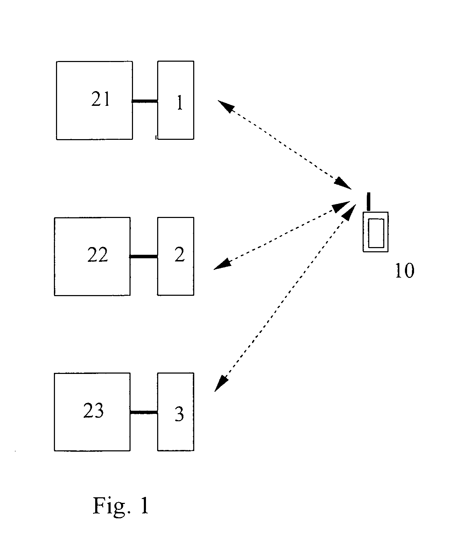

Ein Ausführungsbeispiel der Erfindung wird anhand der beigefügten Zeichnung erläutert, die mehrere Steuereinheiten 21, 22, 23 von Kunststoff verarbeitenden Maschinen (nicht dargestellt) darstellt. Die Steuereinheiten sind jeweils mit Telekommunikationsvorrichtungen 1, 2, 3 verbunden, die ihrerseits über ein Telekommunikationsnetz (Telefonnetz) mit einem Partnergerät 10, in diesem Fall ein handelsübliches Mobiltelefon, kommunizieren.

Die Steuereinheit empfängt von der Kunststoff verarbeitenden Maschine Statussignale wie Sensorsignale etc. und gibt ihrerseits entsprechend einem Steuerprogramm Bedienungssignale wie Verstellsignale etc. an Betätigungselemente der Maschine ab. Durch stationäre Bedienungselemente können Befehlssignale eingegeben werden bzw. können Statussignale wie Sensorsignale oder Alarmsignale an einer Anzeige wiedergegeben werden. Die Steuereinheit 21 steht ferner in Datenkommunikation mit der Telekommunikationsvorrichtung 1, die als Schnittstelle zwischen der Steuereinrichtung 21 und dem Telekommunikationsnetz ausgebildet ist. Einzelheiten des Netzes sind hier nicht dargestellt; es handelt sich beispielsweise um das Telefonnetz aus einem Festnetz und einem aus Zellen aufgebauten Funknetz bzw. mehreren Funknetzen.

Ausgewählte Statusinformation, wie beispielsweise Alarmsignale oder dgl. oder wählbare Statusinformationen werden über die Telekommunikationsvorrichtung an das Mobiltelefon 10 übermittelt und dort wiedergegeben, beispielsweise als elektronische Kurznachrichten oder auch in akustischer Form. In diesem Fall kann beispielsweise die Telekommunikationsvorrichtung mit einem Sprachgenerator versehen sein, sodass Informationen sprachlich übermittelt werden können.

Andererseits können über Bedienungselemente des Mobiltelefons 10 oder über eine Spracheingabe Bedienungsinformationen an die Telekommunikationsvorrichtung 1 übermittelt werden, die dann als Bedienungssignale an die Steuereinheit 21 weitergegeben werden und dort in entsprechende Signale zur Betätigung von Maschinenelementen gewandelt werden.

Zur Vermeidung von konkurrierenden Steuerbefehlen, die einerseits über die stationären Bedienungselemente eingegeben werden, andererseits über das Mobiltelefon 10 kann eine Hierarchie vorgesehen sein, die im Konfliktfall beispielsweise den Befehlen von den stationären Bedienungselementen den Vorzug gibt.

Erfindungsgemäß kann ein Einrichter einer Kunststoff verarbeitenden Maschine mit massenproduzierten standardisierten Geräten aus der Ferne, drahtlos und optional freihändig und bei Bedarf per Stimmeingabe Daten in die Maschine eingeben, Daten von der Maschine empfangen (und dargestellt bekommen). Ferner ist es möglich, die Internet-Technologie bzw. PDA's mit integriertem Mobilfunk zur Maschinensteuerung zu nutzen.

## Patentansprüche

1. Steuereinrichtung für eine Kunststoff verarbeitende Maschine, insbesondere Spritzgießmaschine, mit einer Steuereinheit (21, 22, 23), mindestens einer Maschinenschnittstelle zur Daten- bzw. Signalkommunikation zwischen Maschinenelementen der Kunststoff verarbeitenden Maschine und der Steuereinheit und mit Mitteln zur Ausgabe von Statussignalen und Mitteln zur Eingabe von Bedienungssignalen, **gekennzeichnet durch** eine drahtlose Telekommunikationsvorrichtung (1, 2, 3) zum Austausch von Status- und/oder Bedienungsinformationen mit mindestens einem Partnergerät (10) über ein Telekommunikationsnetz.

2. Steuereinrichtung nach Anspruch 1, **dadurch gekennzeichnet, dass** die Telekommunikationsvorrichtung als Schnittstelle zwischen der Steuereinheit (21) und dem Telekommunikationsnetz ausgebildet ist und Statussignale in Statusinformation in einem Datenformat des Telekommunikationsnetzwerkes umsetzt bzw. Bedienungsinformation im Format des Telekommunikationsnetzwerkes in Bedienungssignale umsetzt.

3. Steuereinrichtung nach Anspruch 1 oder 2,
**dadurch gekennzeichnet, dass** die Telekommunikationsvorrichtung (1) eine Einrichtung zur Spracherkennung aufweist.

4. Steuereinrichtung nach Anspruch 1, 2 oder 3,
**dadurch gekennzeichnet, dass** die Telekommunikationsvorrichtung (1) einen Sprachgenerator aufweist.

5. Steuereinrichtung nach einem der vorstehenden Ansprüche,
**dadurch gekennzeichnet, dass** die Telekommunikationsvorrichtung die Status- und Bedienungsinformation in einem Internet-fähigen Protokoll ausgibt bzw. empfangen kann.

6. Steuersystem aus einer Steuereinrichtung nach einem der Ansprüche 1 bis 5 und einem Mobiltelefon, einem tragbaren Rechner oder einem elektronischen Terminal.

7. Steuersystem nach Anspruch 6, **dadurch gekennzeichnet, dass** das Mobiltelefon einerseits und der tragbare Rechner oder das elektronische Terminal andererseits als Kombinationsgerät ausgebildet sind.

8. Kunststoff verarbeitende Maschine mit einer Steuereinrichtung nach einem der Ansprüche 1 bis 5 oder einem Steuersystem nach Anspruch 6 oder 7.
